# EUROPÄISCHE PATENTSCHRIFT

(11) **EP 3 750 610 B1**
(45) Veröffentlichungstag und Bekanntmachung des Hinweises auf die Patenterteilung: **10.08.2022**
(21) Anmeldenummer: 20176433.9
(22) Anmeldetag: 26.05.2020
(51) Int. Cl.: A63G 21/06, A63G 7/00, A63G 21/04

(54) **EINRICHTUNG ZUM TRANSPORT VON MINDESTENS EINEM FAHRGAST**
DEVICE FOR TRANSPORTING AT LEAST ONE PASSENGER
DISPOSITIF DE TRANSPORT D'AU MOINS UN PASSAGER

(30) Priorität: 14.06.2019 DE 202019103340 U
(43) Veröffentlichungstag der Anmeldung: 16.12.2020
(73) Patentinhaber: Josef Wiegand GMBH & CO. KG, 36169 Rasdorf (DE)
(72) Erfinder: Wiegand, Hendrik, 36169 Rasdorf (DE)
(74) Vertreter: Walther Bayer Faber Patentanwälte PartGmbB

(56) Entgegenhaltungen:
- EP-A1- 1 202 780
- EP-A1- 2 295 123
- WO-A1-2006/080845
- US-A1- 2004 266 540
- US-A1- 2009 031 913

## Beschreibung

Die Erfindung betrifft eine Einrichtung zum Transport von mindestens einem Fahrgast, wobei die Einrichtung mindestens einen ersten Schienenweg aufweist, wobei sich auf dem mindestens einen ersten Schienenweg mindestens ein Fahrzeug befindet, das auf dem ersten Schienenweg verfahrbar ist, wobei das Fahrzeug und der mindestens eine erste Schienenweg durch eine Antriebseinrichtung in Wirkverbindung stehen, wobei die Antriebseinrichtung als elektrischer Linearmotor ausgebildet ist, wobei das mindestens eine Fahrzeug eine erste Steuerung zur Beeinflussung der Geschwindigkeit des mindestens einen Fahrzeugs auf dem mindestens einen ersten Schienenweg aufweist, wobei die erste Steuerung als Fahrgaststeuerung manuell durch den mindestens einen Fahrgast im Fahrzeug bedienbar ist

Einrichtungen zum Transport von Fahrgästen oder Personen, wie zuvor beschrieben, sind auch als Fahrgeschäfte bekannt, auf denen die Menschen zur Belustigung teils mit hoher Geschwindigkeit fahren.

Bekannt ist in diesem Zusammenhang insbesondere die künstliche Rodelbahn, die einen Schienenweg umfasst, auf dem ein oder mehrere Schlitten zum Transport von Personen verfahrbar sind. Die Schlitten sind nicht antreibbar, das heißt, dass der Schienenweg mit Gefälle verlegt werden muss, um das Fahrerlebnis zu ermöglichen. Der Schienenweg besteht hierbei insbesondere aus zwei beabstandet zueinander angeordneten Schienen, auf denen der Schlitten verfahrbar gelagert ist, wobei die Lagerung des Schlittens auf dem Schienenweg mit den beiden parallel zueinander verlaufenden Schienen derart gestaltet ist, dass der Schlitten sich insbesondere nicht vom Schienenweg abhebt. Das heißt, auf der Ober- und Unterseite der Schiene sind jeweils Rollenpaare angeordnet, wobei zusätzlich auch auf der Seite der Schiene entsprechende Rollen vorgesehen sind. Hieraus folgt unmittelbar, dass der Schlitten sowohl in Längsrichtung als auch in Querrichtung geführt ist, wobei zusätzlich ein Ausheben durch die von unten an die Schienen angreifenden Rollen aus dem Schienenweg ausgeschlossen ist.

Darüber hinaus gibt es ein Fahrgeschäft zum Transport von Personen, bei der der Fahrweg als längliche Wanne ausgebildet ist. In der Wanne befindet sich der Schlitten, wobei der Schlitten eine Fahrgeschwindigkeit von bis zu 40 km/h erreichen kann. Die Geschwindigkeit kann bis zu diesen max. 40 km/h vom Fahrgast bestimmt werden. Der Antrieb des Schlittens erfolgt über einen Elektromotor, wobei zusätzlich, um Auffahrunfälle zu verhindern, eine sogenannte automatische Distanzkontrolle vorgesehen ist.

Eine vorgegebene Grundgeschwindigkeit verhindert das Anhalten des Schlittens auf der Strecke. Dadurch, dass der Schlitten über einen eigenen Antrieb verfügt, besteht nicht die Notwendigkeit, künstliche Gefällstrecken in dem Fahrweg vorzusehen.

Aus der US 2004/0266540 A1 ist eine Einrichtung zum Transport von mindestens einem Fahrgast bekannt, wobei die Einrichtung mindestens einen ersten Schienenweg aufweist, wobei sich auf dem mindestens einen ersten Schienenweg mindestens ein Fahrzeug befindet, das auf dem mindestens einen ersten Schienenweg verfahrbar und geführt ist. Diese Einrichtung zeichnet sich weiterhin dadurch aus, dass das Fahrzeug und der mindestens eine erste Schienenweg durch eine Antriebseinrichtung in Wirkverbindung stehen, wobei die Antriebseinrichtung als elektrischer, insbesondere berührungsloser Linearmotor ausgebildet ist, wobei das mindestens eine Fahrzeug eine Steuerung zur Beeinflussung der Geschwindigkeit des mindestens einen Fahrzeugs auf dem mindestens einen ersten Schienenweg aufweist, wobei die Steuerung als Fahrgaststeuerung manuell durch den mindestens einen Fahrgast im Fahrzeug bedienbar ist. Als elektrischer, berührungsloser Linearmotor kann hier insbesondere ein linearer Induktionsmotor (LiM) zum Einsatz gelangen.

Aus der US 2011/0061558 ist bekannt, dass der Stator als aktives Bauteil im Schienenweg angesteuert wird, also die entsprechenden Steuerungsimpulse erhält, hingegen der Läufer als passives Bauteil im Fahrzeug nicht angesteuert wird.

Der Erfindung liegt ausgehend vom Stand der Technik gemäß der US 2004/0266540 A1 die Aufgabe zugrunde, die bekannte Einrichtung zum Transport von mindestens einem Fahrgast zu verbessern. Zur Lösung der Aufgabe ist vorgesehen, dass der Stator des elektrischen Linearmotors im Bereich des mindestens einen ersten Schienenweges angeordnet ist, und der Läufer durch das mindestens eine Fahrzeug aufgenommen ist.

Es wurde bereits darauf hingewiesen, dass der Läufer, der im Fahrzeug angeordnet ist, in dem LiM das aktive elektromagnetische Antriebselement bildet. Als ein solches ist dieses Antriebselement ansteuerbar. Das heißt, die erste Steuerung, also die Steuerung, die durch den Fahrgast betätigbar ist, ist mit dem Läufer als aktives Antriebselement verbunden. Gleiches gilt für die zweite Steuerung, die selbsttätig ist und der ersten Steuerung, die durch den Fahrgast betätigbar ist, übergeordnet ist. Eine Ansteuerung des im Fahrzeug befindlichen Läufers durch die beiden Steuerungen, die ebenfalls im Fahrzeug angeordnet sind, ist wesentlich einfacher zu gestalten als eine Ansteuerung des Stators. Im Übrigen ist diese Art der Ansteuerung wesentlich weniger fehleranfällig, weil die einzelnen Steuerungskomponenten im Fahrzeug vor Witterungseinflüssen weitgehend geschützt sind.

Bei der bevorzugten Ausbildung des elektrischen Linearmotors als linearer Induktionsmotor (LiM) ist vorgesehen, dass der Stator, der sich parallel zum Schienenweg erstreckt, eine Aluminiumplatte umfasst, die auf einer Stahlplatte lagert. Gehalten wird der Stator durch ein Gestell, das auch den ersten Schienenweg trägt. Das heißt, der Stator, als passive Reaktionskomponente, befindet sich im Bereich des ersten Schienenweges. Der Läufer, als aktives elektromagnetisches Antriebselement als Teil des Fahrzeugs, weist eine Mehrzahl von Spulen auf. Der lineare Induktionsmotor ist insofern als ein asynchroner Wechselstrom-Linearmotor ausgebildet.

Die Einrichtung zum Transport von Personen umfasst insbesondere mehrere Fahrzeuge, die durch einen vorteilhaft berührungslosen elektrischen Linearmotor angetrieben sind, wobei die Geschwindigkeit eines jeden Fahrzeugs innerhalb bestimmter vorgegebener Grenzen durch den Fahrgast auf dem Schienenweg selbst bestimmt wird.

Vorteilhafte Merkmale und Ausgestaltungen der Erfindung ergeben sich aus den Unteransprüchen.

So ist nach einem weiteren Merkmal vorgesehen, dass der erste Schienenweg zwei Fahrschienen zur Aufnahme und Führung des mindestens einen Fahrzeugs aufweist. Theoretisch denkbar ist allerdings auch, lediglich eine Fahrschiene zur Aufnahme des Fahrzeugs vorzusehen, was den Raumbedarf von derartigen Einrichtungen gegebenenfalls signifikant vermindern kann.

Es wurde bereits erwähnt, dass der elektrische Linearmotor (LiM) eine zweite, selbsttätige Steuerung aufweist, die der ersten Steuerung, also der Steuerung durch den Fahrgast, übergeordnet ist, und auf der Grundlage des Abstands zweier oder mehrerer Fahrzeuge zueinander, der Geschwindigkeit der Fahrzeuge und/oder der Streckenführung entsprechende Signale an den Linearmotor übermittelt, um die Fahrgeschwindigkeit einzelner Fahrzeuge zu beschleunigen, abzubremsen oder stillzusetzen. Dies ist aus Gründen der Sicherheit erforderlich, da insbesondere bei mehreren Fahrzeugen auf dem Schienenweg in Abhängigkeit von dem Abstand der Fahrzeuge zueinander durch die Ansteuerung des Linearmotors zumindest in Bezug auf eines der Fahrzeuge wieder ein genügender Abstand zu dem jeweils benachbarten Fahrzeug hergestellt werden kann. Denn bestimmte Mindestabstände dürfen aus Sicherheitsgründen nicht unterschritten werden.

Für die konstruktive Ausgestaltung gilt, dass die Führung des Fahrzeugs auf den ersten Fahrschienen durch jeweils ein oder mehrere erste Rollensätze erfolgt. Ein erster Rollensatz umfasst vorteilhaft mindestens drei Rollen, wobei eine Rolle an der jeweiligen Fahrschiene seitlich und zwei Rollen an der jeweiligen Fahrschiene von oben und von unten angreifen.

Die von oben und unten an der ersten Fahrschiene angreifenden Rollen können alternativ jeweils als Rollenpaar ausgebildet sind. Hierdurch ergibt sich ein ruhigerer Lauf.

Vorteilhaft verfügt ein jedes Fahrzeug über mindestens vier erste Rollensätze, die gegenüber und hintereinander, also im Viereck, mit den ersten Fahrschienen in Verbindung stehen. Hierdurch ergibt sich eine stabile Führung des Fahrzeugs auf dem Schienenweg.

Eine besonders vorteilhafte Ausführungsform zeichnet sich dadurch aus, dass zusätzlich zu dem ersten Schienenweg ein zweiter Schienenweg vorhanden ist. Auch der zweite Schienenweg umfasst, insbesondere wie auch der erste Schienenweg, zwei zweite Fahrschienen, wobei jeweils eine zweite Fahrschiene zu jeder Seite des ersten Schienenwegs verläuft. Die Führung des Fahrzeugs auf der zweiten Fahrschiene erfolgt bevorzugt durch ein oder mehrere zweite Rollensätze, wobei insbesondere ein zweiter Rollensatz zwei Rollen umfasst, wobei eine Rolle von innen seitlich an der jeweiligen zweiten Fahrschiene angreift und eine zweite Rolle von oben an der jeweiligen zweiten Fahrschiene anliegt. Das heißt, dass das Fahrzeug nicht nur durch die Antriebseinrichtung mit den entsprechenden Rollensätzen auf dem ersten Schienenweg gehalten und geführt ist, sondern darüber hinaus noch die Fahrgastzelle des Fahrzeugs durch die zweiten Rollensätze zusätzlich gehalten und geführt ist, wobei auch in Bezug auf die zweiten Rollensätze gilt, dass hier vorteilhaft vier derartige Rollensätze die Fahrgastzelle mit dem zweiten Schienenweg verbinden.

Als insbesondere wesentlich bei der Konstruktion mit zwei Schienenwegen, bei der die Fahrgastzelle mit dem zweiten Schienenweg geführt und verfahrbar in Verbindung steht, ist, dass die Fahrgastzelle in Richtung quer zur Längsrichtung der Fahrschienen und in Richtung der Hochachse fliegend durch eine Verbindungseinrichtung an der Antriebseinrichtung gelagert ist. In Längsrichtung der Fahrschienen ist die Lagerung spielfrei ausgebildet. Somit können in Längsrichtung die Kräfte beim Beschleunigen und Bremsen spielfrei übertragen werden. Der Vorteil dieser Konstruktion besteht darin, dass es keine Verspannungen gibt, wodurch der Linearmotor genauer geführt werden kann, was für die Funktion des Linearmotors von Relevanz ist.

Außerdem werden hierdurch die auftretenden Kräfte wie Flieh- und Gewichtskräfte, auf zwei Schienenwege aufgeteilt, was insbesondere auch höhere Kurvengeschwindigkeiten erlaubt.

Das heißt, grundsätzlich denkbar ist eine Ausführungsform der erfindungsgemäßen Einrichtung, wenn lediglich ein erster Schienenweg vorhanden ist, und das Fahrzeug durch die Antriebseinrichtung mit diesem ersten Schienenweg durch die entsprechenden Rollensätze verbunden ist; es hat sich allerdings auch herausgestellt, dass eine erhöhte Sicherheit, insbesondere bei hohen Geschwindigkeiten, und hier insbesondere hohen Kurvengeschwindigkeiten, dann gegeben ist, wenn ein zweiter Schienenweg vorgesehen ist, mit jeweils einer zweiten Fahrschiene zu jeder Seite des ersten Schienenweges, wobei auch hier die Verbindung zwischen dem Fahrzeug und insbesondere der Fahrgastzelle mit dem zweiten Schienenweg durch Rollensätze erfolgt, wie dies bereits zuvor beschrieben worden ist. Die Rollensätze sorgen für die Führung des Fahrzeugs und die Verfahrbarkeit.

Als ganz besonders vorteilhaft hat sich herausgestellt, wenn der erste und zweite Schienenweg durch ein gemeinsames Gestell gehalten sind, da hierdurch eine stabile Einheit umfassend den ersten und den zweiten Schienenweg gebildet wird, die in sich derart steif ist, dass es zu keinen Verwindungen und Versätzen kommen kann.

Anhand der Zeichnungen wird die Erfindung nachstehend beispielhaft näher erläutert.

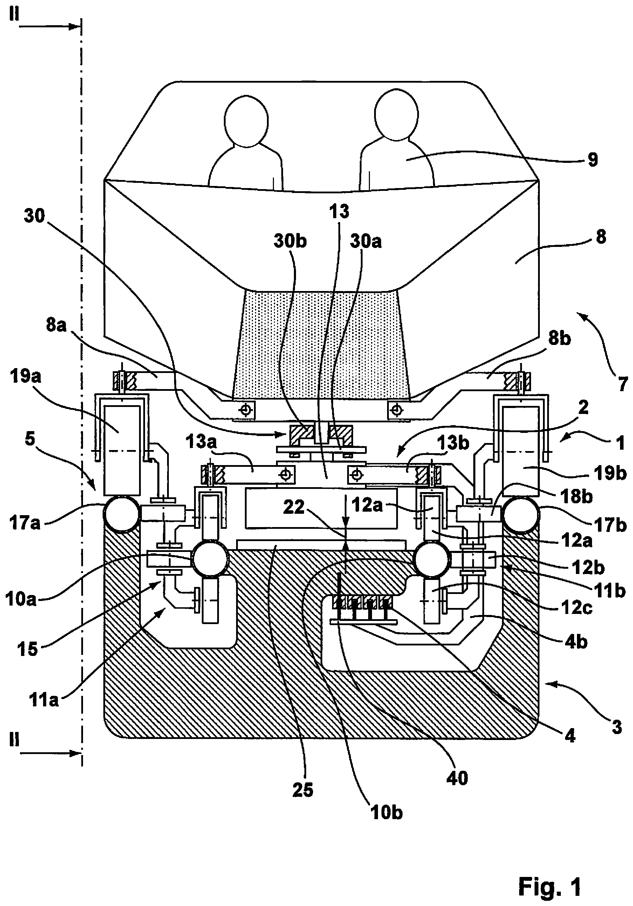

- Fig. 1: zeigt einen Schnitt durch die erfindungsgemäße Einrichtung zum Transport mindestens eines Fahrgastes;

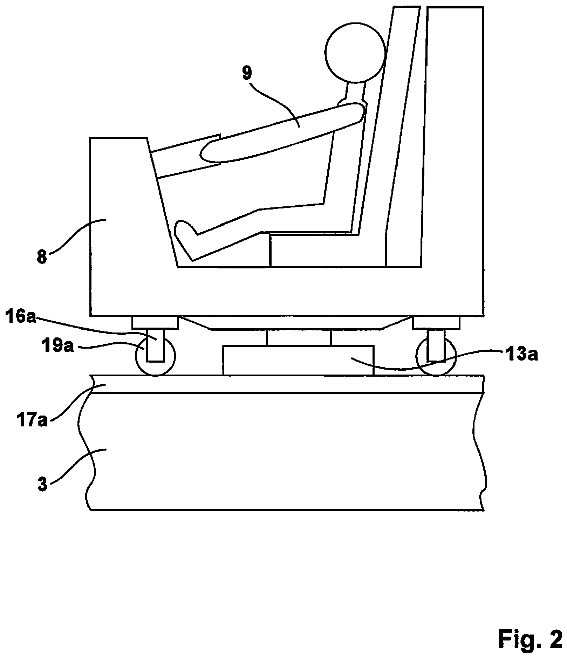

- Fig. 2: zeigt eine Seitenansicht gemäß der Linie II-II aus Fig. 1.

Die Einrichtung 1 zum Transport mindestens eines Fahrgastes umfasst ein Gestell 3 mit einem ersten Schienenweg 5 und einem zweiten Schienenweg 15. Auf dem ersten und zweiten Schienenweg 5, 15, lagert das mit 7 bezeichnete Fahrzeug mit der Fahrgastzelle 8 zur Aufnahme der Passagiere 9. Das Fahrzeug umfasst des Weiteren eine Antriebseinrichtung 2 mit einem Läufer 14 am Fahrzeug und dem Stator 25 am Schienenweg.

Der Stator 25 weist eine von dem ersten Schienenweg 5 gehaltene plattenförmige Anordnung mit einer oberen Platte oder Schicht aus Aluminium auf, die auf einer Stahlplatte lagert. Der Läufer 14 umfasst eine Mehrzahl von hintereinander angeordneten Spulen. Ein solcher Motor wird auch als linearer Induktionsmotor (LiM) bezeichnet.

Der erste Schienenweg 5 weist zwei erste Fahrschienen 10a, 10b auf, die durch das Gestell 3 gehalten sind. An der ersten und der zweiten Fahrschiene 10a, 10b greift ein erster Rollensatz 11a, 11b an, wobei ein solcher erster Rollensatz über drei Rollen 12a, 12b und 12c verfügt, wobei die Rollen 12a und 12c von oben bzw. von unten an die erste Fahrschiene angreifen, wohingegen die Rolle 12b horizontal, das heißt seitlich von außen, an der ersten Fahrschiene des ersten Schienenwegs 5 anliegt. Insbesondere sind hierbei pro Fahrzeug 7 jeweils vier Rollensätze 11a, 11b vorgesehen, und zwar jeweils paarweise gegenüber und hintereinander am Fahrzeug angeordnet. Hierdurch ist eine sichere Führung des Fahrzeugs 7 insgesamt gewährleistet.

Die Rollensätze sind durch Achsen 13a, 13b mit einer Achsaufnahme 13 verbunden. Die Achsaufnahme 13 lagert auf dem Gehäuse des Läufers 14 des Linearmotors. Daraus folgt somit, dass der Läufer des Linearmotors Teil des Fahrgestells des mit 7 bezeichneten Fahrzeugs ist.

Das Gestell 3 weist im Bereich des ersten Schienenweges 5 Stromschienen 4 auf, die in Kontakt stehen mit einem Stromabnehmer 4a, der durch einen Arm 4b gehalten ist. Der Arm 4b wiederum steht in Verbindung mit der Achsaufnahme 13, die sich, wie bereits ausgeführt, auf dem Läufer 14 abstützt.

Betrachtet man nunmehr die Fahrgastzelle 8 des Fahrzeugs 7, so erkennt man eine linke und eine rechte Achse 8a, 8b, die jeweils einen zweiten Rollensatz 16a, 16b aufnehmen, die sich an den zweiten Fahrschienen 17a, 17b des zweiten Schienenweges 15 abstützen. Hierbei ist jeweils eine erste Rolle 18a, 18b vorgesehen, die horizontal seitlich von innen an die zweite Fahrschiene 17a, 17b angreift, sowie eine zweite Rolle 19a, 19b, die von oben auf der zweiten Fahrschiene 17a, 17b anliegt. Beide Rollen, sowohl die ersten Rollen 18a, 18b und die zweiten Rollen 19a, 19b, sind jeweils Teil des zweiten Rollensatzes 16a, 16b, wobei der Rollensatz 16a, 16b durch die Achsen 8a, 8b gehalten ist.

Zuvor wurde bereits dargelegt, dass die Antriebseinrichtung 2 über den Läufer 14 verfügt, der über den Abstand 22 in Wirkverbindung mit dem Stator 25, der als Reaktionsplatte des berührungslosen Linearmotors ausgebildet ist, steht. Die Reaktionsplatte umfasst, wie bereits ausgeführt, eine Aluminiumplatte oder Aluminiumschicht, die auf einer Stahlplatte als Träger lagert. Gehalten wird die Reaktionsplatte oder der Stator durch das Gestell 3.

Es wurde bereits darauf hingewiesen, dass der Läufer 14, mit mehreren hintereinander angeordneten Spulen, über eine Achsaufnahme 13 verfügt, wobei die Achsaufnahme 13 durch eine Verbindungseinrichtung 30 an der Fahrgastzelle 8 des Fahrzeugs 7 angeordnet ist. Die Verbindungseinrichtung 30 umfasst ein Aufnahmeglied 30a und ein Eingriffsglied 30b, wobei das Eingriffsglied 30b an der Fahrgastzelle angeordnet ist, wohingegen das Aufnahmeglied 30a von der Achsaufnahme 13 gehalten wird.

Vorteilhaft hierbei ist, dass das Eingriffsglied 30b in dem Aufnahmeglied 30a in Richtung der Hochachse 30c und quer zu dem Schienenweg 5 fliegend, das heißt mit Spiel, gelagert ist, um Verspannungen des Fahrzeugs 7 auf den beiden Schienenwegen 5, 15 zu vermeiden. In Längsrichtung zum Schienenweg ist die Lagerung spielfrei.

Über die Länge des Fahrzeugs können zwei oder mehr derartige Verbindungseinrichtungen vorgesehen sein. Die Verbindungseinrichtungen können hierbei als Steck- und/oder Rastverbindungen ausgebildet sein.

### Bezugszeichenliste:

- 1: Einrichtung
- 2: Antriebseinrichtung
- 3: Gestell
- 4: Stromschiene
- 4a: Stromabnehmer
- 4b: Arm
- 5: erster Schienenweg
- 7: Fahrzeug
- 8: Fahrgastzelle
- 8a: linke Achse
- 8b: rechte Achse
- 9: Passagier
- 10a: erste Fahrschiene
- 10b: erste Fahrschiene
- 11a: erster Rollensatz
- 11b: erster Rollensatz
- 12a: Rolle
- 12b: Rolle
- 12c: Rolle
- 13: Achsaufnahme
- 13a: Achse
- 13b: Achse
- 14: Läufer
- 15: zweiter Schienenweg
- 16a: zweiter Rollensatz
- 16b: zweiter Rollensatz
- 17a: zweite Fahrschiene
- 17b: zweite Fahrschiene
- 18a: erste Rolle
- 18b: erste Rolle
- 19a: zweite Rolle
- 19b: zweite Rolle
- 22: Abstand
- 25: Stator
- 30: Verbindungseinrichtung
- 30a: Aufnahmeglied
- 30b: Eingriffsglied
- 30c: Hochachse

## Patentansprüche

1. Einrichtung (1) zum Transport von mindestens einem Fahrgast, wobei die Einrichtung (1) mindestens einen ersten Schienenweg (5) aufweist, wobei sich auf dem mindestens einen ersten Schienenweg (5) mindestens ein Fahrzeug (7) befindet, das auf dem mindestens einen ersten Schienenweg (5) verfahrbar ist, wobei das Fahrzeug (7) und der mindestens eine erste Schienenweg (5) durch eine Antriebseinrichtung (2) in Wirkverbindung stehen, wobei die Antriebseinrichtung (2) als elektrischer Linearmotor ausgebildet ist, wobei das mindestens eine Fahrzeug (7) eine erste Steuerung zur Beeinflussung der Geschwindigkeit des mindestens einen Fahrzeugs (7) auf dem mindestens einen ersten Schienenweg (5) aufweist, wobei die erste Steuerung als Fahrgaststeuerung manuell durch den mindestens einen Fahrgast im Fahrzeug (7) bedienbar ist,
**dadurch gekennzeichnet,**
**dass** der Stator (25) des elektrischen Linearmotors im Bereich des mindestens einen ersten Schienenwegs (5) angeordnet ist,
wobei der Läufer (14) durch das mindestens eine Fahrzeug (7) aufgenommen ist.

2. Einrichtung (1) nach Anspruch 1,
**dadurch gekennzeichnet,**
**dass** der mindestens eine erste Schienenweg (5) zwei erste Fahrschienen (10a, 10b) zur Aufnahme und Führung des mindestens einen Fahrzeugs (7) aufweist.

3. Einrichtung (1) nach einem der voranstehenden Ansprüche 1 oder 2,
**dadurch gekennzeichnet,**
**dass** der elektrische Linearmotor der Antriebseinrichtung (2) eine selbsttätige zweite Steuerung aufweist, die der ersten Steuerung übergeordnet ist, und die auf der Grundlage des Abstands zweier oder mehrerer Fahrzeuge (7) zueinander, der Geschwindigkeit der Fahrzeuge (7) und/oder der Streckenführung entsprechende Signale an den Linearmotor übermittelt, um die Fahrgeschwindigkeit einzelner Fahrzeuge (7) zu beschleunigen oder abzubremsen oder stillzusetzen.

4. Einrichtung (1) nach einem der voranstehenden Ansprüche,
**dadurch gekennzeichnet,**
**dass** der Linearmotor berührungslos ist, wobei zwischen Stator (25) und Läufer (14) ein Abstand (22) vorgesehen ist.

5. Einrichtung (1) nach einem der voranstehenden Ansprüche 2 bis 4,
**dadurch gekennzeichnet,**
**dass** die Führung und das Verfahren des Fahrzeugs (7) auf den ersten Fahrschienen (10a, 10b) durch jeweils ein oder mehrere erste Rollensätze (11a, 11b) erfolgt.

6. Einrichtung (1) nach einem der voranstehenden Ansprüche,
**dadurch gekennzeichnet,**
**dass** zusätzlich zu dem ersten Schienenweg (5) ein zweiter Schienenweg (15) vorhanden ist.

7. Einrichtung (1) nach Anspruch 6,
**dadurch gekennzeichnet,**
**dass** der zweite Schienenweg (15) zwei zweite Fahrschienen (17a, 17b) umfasst, wobei jeweils eine zweite Fahrschiene (17a, 17b) zu jeder Seite des ersten Schienenwegs (5) verläuft.

8. Einrichtung (1) nach einem der voranstehenden Ansprüche 6 oder 7,
**dadurch gekennzeichnet,**
**dass** die Führung und das Verfahren des Fahrzeugs (7) auf den zweiten Fahrschienen (17a, 17b) durch ein oder mehrere zweite Rollensätze (16a, 16b) erfolgt.

9. Einrichtung (1) nach einem der voranstehenden Ansprüche 6 bis 8,
**dadurch gekennzeichnet,**
**dass** der erste und der zweite Schienenweg (5, 15) durch ein durchgehendes Gestell (3) gehalten sind.

10. Einrichtung (1) nach einem der voranstehenden Ansprüche,
**dadurch gekennzeichnet,**
**dass** das Fahrzeug (7) eine Fahrgastzelle (8) aufweist, die durch eine Verbindungseinrichtung (30) mit der Antriebseinrichtung (2) verbunden ist.

11. Einrichtung (1) nach Anspruch 10,
**dadurch gekennzeichnet,**
**dass** die Verbindungseinrichtung (30) als fliegende Lagerung in Richtung der Hochachse (30c) und quer zu dem Verlauf des Schienenwegs (5, 15) ausgebildet ist.

12. Einrichtung (1) nach Anspruch 11,
**dadurch gekennzeichnet,**
**dass** zur ruckfreien Übertragung von Kräften beim Beschleunigen und Abbremsen die Verbindungseinrichtung (30) in Längsrichtung des Schienenweges (5, 15) kein Spiel aufweist.

13. Einrichtung (1) nach Anspruch 3,
**dadurch gekennzeichnet,**
**dass** die erste und/oder die zweite Steuerung mit dem im Fahrzeug befindlichen, als aktives elektromagnetisches Bauteil ausgebildeten Läufer in elektrischer Verbindung stehen.

## Claims

1. A unit (1) for transporting at least one passenger, wherein the unit (1) has at least one first rail line (5), with at least one vehicle (7) that is travelable and guided on the at least one first rail line (5) being located on the at least one first rail line (5), wherein the vehicle (7) and the at least one first rail line (5) are actively connected by a drive device (2), with the drive device (2) being configured as an electric linear motor, with the at least one vehicle (7) having a control for influencing the speed of the at least one vehicle (7) on the at least one first rail line (5), and with the first control being manually operable as a passenger control by the at least one passenger in the vehicle (7),
**characterized in that**
the stator (25) of the electric linear motor is arranged in the region of the at least one first rail line (5),
with the rotor (14) being received by the at least one vehicle (7).

2. A unit (1) in accordance with claim 1,
**characterized in that**
the at least one first rail line (5) has two first ride rails (10a, 10b) for receiving and guiding the at least one vehicle (7).

3. A unit (1) in accordance with one of the preceding claims 1 or 2,
**characterized in that**
the electric linear motor of the drive device (2) has an independent second control that is master to the first control and that transmits signals corresponding to the speed of individual vehicles (7) and/or to the route to the linear motor on the basis of the spacing of two or more vehicles (7) from one another, to accelerate or decelerate or stop the travel speed of individual vehicles (7).

4. A unit (1) in accordance with one of the preceding claims,
**characterized in that**
the linear motor is contactless, with a spacing (22) being provided between the stator (25) and the rotor (14).

5. A unit (1) in accordance with one of the preceding claims 2 to 4,
**characterized in that**
the guidance and the traveling of the vehicle (7) on the first ride rails (10a, 10b) takes place by a respective one or more first roller sets (11a, 11b).

6. A unit (1) in accordance with one of the preceding claims,
**characterized in that**
a second rail line (15) is present in addition to the first rail line (5).

7. A unit (1) in accordance with claim 6,
**characterized in that**
the second rail line (15) comprises two second ride rails (17a, 17b), with a respective second ride rail (17a, 17) running at each side of the first rail line (5).

8. A unit (1) in accordance with one of the preceding claims 6 or 7,
**characterized in that**
the guidance and the traveling of the vehicle (7) on the second ride rails (17a, 17b) takes place by one or more second roller sets (16a, 16b).

9. A unit (1) in accordance with one of the preceding claims 6 to 8,
**characterized in that**
the first and second rail lines (5, 15) are held by a continuous frame (3).

10. A unit (1) in accordance with one of the preceding claims,
**characterized in that**
the vehicle (7) has a passenger cabin (8) that is connected to the drive device (2) by a connection device (30).

11. A unit (1) in accordance with claim 10,
**characterized in that**
the connection device (30) is formed as a suspended support in the direction of the vertical axis (30c) and transversely to the extent of the rail line (5, 15).

12. A unit (1) in accordance with claim 11,
**characterized in that**
the connection device (30) has no play in the longitudinal direction of the rail line (5, 15) for a jerk-free transmission of forces on accelerating and decelerating.

13. A unit (1) in accordance with claim 3
**characterized in that**
the first and/or the second control is/are electrically connected to the rotor located in the vehicle and configured as an active electromagnetic element.

## Revendications

1. Dispositif (1) de transport d'au moins un passager, le dispositif (1) comportant au moins une première voie ferrée (5), au moins un véhicule (7) se trouvant sur l'au moins une première voie ferrée (5), lequel peut être déplacé sur l'au moins une première voie ferrée (5), le véhicule (7) et l'au moins une première voie ferrée (5) se trouvant en liaison fonctionnelle par le biais d'un dispositif d'entraînement (2), le dispositif d'entraînement (2) étant réalisé sous la forme d'un moteur linéaire électrique, l'au moins un véhicule (7) comportant une première commande destinée à influencer la vitesse de l'au moins un véhicule (7) sur l'au moins une première voie ferrée (5), la première commande pouvant être utilisée comme commande passager manuellement par l'au moins un passager du véhicule (7),
**caractérisé en ce que**
le stator (25) du moteur linéaire électrique est disposé dans la zone de l'au moins une première voie ferrée (5), le rotor (14) étant logé dans l'au moins un véhicule (7).

2. Dispositif (1) selon la revendication 1,
**caractérisé en ce que**
l'au moins une première voie ferrée (5) comporte deux premiers rails de roulement (10a, 10b) destinés à recevoir et guider l'au moins un véhicule (7).

3. Dispositif (1) selon l'une des revendications précédentes 1 ou 2,
**caractérisé en ce que**
le moteur linéaire électrique du dispositif d'entraînement (2) comporte une seconde commande automatique, qui est prioritaire par rapport à la première commande, et qui transmet, sur la base de l'écart entre deux véhicules (7) ou plus, de la vitesse des véhicules (7) et/ou du tracé de ligne, des signaux correspondants au moteur linéaire pour augmenter ou freiner ou arrêter la vitesse de marche de véhicules (7) individuels.

4. Dispositif (1) selon l'une des revendications précédentes,
**caractérisé en ce que**
le moteur linéaire est sans contact, un écart (22) étant prévu entre le stator (25) et le rotor (14).

5. Dispositif (1) selon l'une des revendications précédentes 2 à 4,
**caractérisé en ce que**
le guidage et le déplacement du véhicule (7) sur les premiers rails de roulement (10a, 10b) est effectué par respectivement un ou plusieurs ensembles de galets (11a, 11b).

6. Dispositif (1) selon l'une des revendications précédentes,
**caractérisé en ce que**
une seconde voie ferrée (15) est présente en plus de la première voie ferrée (5).

7. Dispositif (1) selon la revendication 6,
**caractérisé en ce que**
la seconde voie ferrée (15) comprend deux seconds rails de roulement (17a, 17b), un second rail de roulement (17a, 17b) s'étendant respectivement de chaque côté de la première voie ferrée (5).

8. Dispositif (1) selon l'une des revendications précédentes 6 ou 7,
**caractérisé en ce que**
le guidage et le déplacement du véhicule (7) sur les seconds rails de roulement (17a, 17b) est effectué par un ou plusieurs seconds ensembles de galets (16a, 16b).

9. Dispositif (1) selon l'une des revendications précédentes 6 à 8,
**caractérisé en ce que**
la première et la seconde voie ferrée (5, 15) sont maintenues par un bâti (3) continu.

10. Dispositif (1) selon l'une des revendications précédentes,
**caractérisé en ce que**
le véhicule (7) comporte un habitacle (8), qui est relié au dispositif d'entraînement (2) par un dispositif de liaison (30).

11. Dispositif (1) selon la revendication 10,
**caractérisé en ce que**
le dispositif de liaison (30) est réalisé sous la forme d'un support flottant dans la direction de l'axe vertical (30c) et transversalement au tracé de la voie ferrée (5, 15).

12. Dispositif (1) selon la revendication 11,
**caractérisé en ce que**,
pour la transmission sans à-coups de forces lors de l'accélération et du freinage, le dispositif de liaison (30) ne comporte aucun jeu dans la direction longitudinale de la voie ferrée (5, 15).

13. Dispositif (1) selon la revendication 3,
**caractérisé en ce que**
la première et/ou la seconde commande se trouvent en liaison électrique avec le rotor se trouvant dans le véhicule et réalisé sous la forme d'un élément électromagnétique.
